Europäisches Patentamt

European Patent Office

Office européen des brevets

(19)

(11) Veröffentlichungsnummer: **0 236 725**
**A2**

# (12) EUROPÄISCHE PATENTANMELDUNG

(21) Anmeldenummer: 87101431.2

(22) Anmeldetag: 03.02.87

(51) Int. Cl.³: **B 32 B 27/12**
**A 47 B 95/04**

(30) Priorität: 01.03.86 DE 8605651 U

(43) Veröffentlichungstag der Anmeldung:
16.09.87 Patentblatt 87/38

(84) Benannte Vertragsstaaten:
FR GB IT

(71) Anmelder: REHAU AG + Co
Rheniumhaus
D-8673 Rehau(DE)

(72) Erfinder:
Die Erfinder haben auf ihre Nennung verzichtet

(54) Kantenband aus Kunststoff.

(57) Die Erfindung betrifft ein Kantenband aus Kunststoff zur Verwendung als Kantenumleimer von Platten für Möbel und dergleichen. Dieses Kantenband ist einseitig auf seiner Klebefläche mit einer saugfähigen Folie fest verbunden. Die saugfähige Folie kann ein Vlies sein, welches auf der Basis Cellulose-Textil aufgebaut ist. Die saugfähige Folie der Erfindung kann bereits vor der Verbindung mit dem Kantenband mit einem Haftvermittler getränkt sein.

Croydon Printing Company Ltd.

Die Neuerung betrifft ein Kantenband aus Kunststoff zur
Verwendung als Kantenumleimer von Platten für Möbel und
dergleichen.

Derartige Kantenbänder sind umfangreich bekannt. Sie werden beispielsweise als glatte Kantenumleimer auf die Kanten von Möbelbauplatten aufgebracht und dienen zum Schutz
der Plattenkanten genauso wie zur Dekoration. Sie können
daher als Tischumleimer genauso verwendet werden wie als
dekorativer Abschluß von Platten im Möbelbau, wie z.B.
Möbeltüren.

Wird zur Herstellung der Kantenbänder das Kunststoffmaterial Polyvinylchlorid verwendet, so ist es bisher nicht
möglich gewesen, die Verklebung im Thermoaktivierverfahren mit den Plattenkanten über Dispersionsleim auf der
Basis Polyvinylacetat (PVAc) herzustellen. Bei Verwendung
eines solchen Leims wird die Plattenkante zunächst mit
Leim beschichtet und durchläuft vor Aufbringung des Kantenbandes eine Heizstation, in der dem Kleber die Feuchtigkeit entzogen wird. Wenn danach das Kantenband auf den
vorgetrockneten Kleber aufgedrückt wird, erhält man keine
ausreichende Verbindung zwischen dem PVC-Band und der Möbelkante.

Man hat sich bei Kantenbändern aus Thermoplasten bisher
damit beholfen, daß spezifische Zweikomponentenleime auf
Polyvinylacetat-Basis mit entsprechendem Härterzusatz
eingesetzt worden sind. Derartige Leime kosten um ein erhebliches mehr als der PVAc-Leim für das Thermoaktivierverfahren, so daß ihre Verwendung schon wegen des erheblich gestiegenen Kostenfaktors nicht in Frage kommt. Auch
wegen der komplizierten Handhabung, die sich aufgrund des
Härterzusatzes mit einer stark begrenzten Topfzeit ergibt,

wird die Verwendung solcher komplizierter Leimtypen bei der Verklebung von Kantenbändern auf Möbelkanten abgelehnt.

Die Neuerung hat sich dem gegenüber die Aufgabe gestellt, ein speziell aufbereitetes Kantenband anzugeben, welches mit PVAc-Leim auf der Basis Polyvinylacetat ohne Härter - und sonstige Zusätze - mit der Möbelkante verklebt werden kann. Neuerungsgemäß wird dazu vorgeschlagen, daß das Kantenband einseitig auf seiner Klebefläche mit einer saugfähigen Folie fest verbunden ist.

Es hat sich hier als vorteilhaft herausgestellt, daß die saugfähige Folie ein Vlies ist. Dieses Vlies wird bereits vor der Verbindung mit dem Kantenband mit einem Haftvermittler getränkt. Das Vlies kann beispielsweise auf der Basis Cellulose-Textil aufgebaut sein.

Der neuerungsgemäße Aufbau des Kantenbandes kann bei dessen Herstellung selbst erzeugt werden. Vorteilhaft wird hierzu das Verfahren der Koextrusion verwendet. Hierbei wird das bereits mit dem Haftvermittler getränkte Vlies beispielsweise in einem Spritzkopf auf das noch im thermoplastischem Zustand befindliche PVC-Kantenband aufgefahren und aufgrund der vorhandenen Extrusionswärme über den Haftvermittler fest und bleibend mit der Oberfläche des Kantenbandes verbunden. Hierbei erweist sich als vorteilhaft die Verwendung einer saugfähigen Folie, z.B. eines Vlieses. Dieses Vlies hat sich vor der Verbindung mit der Oberfläche des Kantenbandes im Extrusionskopf mit dem Haftvermittler so vollgesaugt, daß die vorhandene Menge völlig ausreicht, die feste Verbindung zur Oberfläche des Kantenbandes herzustellen. Aufgrund der Aufbringung im Koextrusions-Verfahren wird auch vermieden, daß

- 3 -

das Vlies in welliger oder faltiger Form auf der Oberfläche des Kantenbandes angebracht ist. Die Endbereiche des Extrusionskopfes, die das Kantenband und das Vlies gemeinsam durchlaufen, wirken hier auf der Vliesseite wie ein Bügelelement und bewirken somit eine völlig glatte und planebene Aufbringung des Vlieses auf die zugeordnete Außenfläche des Kantenbandes.

Das Vlies kann sowohl auf der Basis Cellulose-Textil aufgebaut sein als auch alle denkbaren anderen Materialzusammensetzungen aufweisen, die lediglich zwei Merkmale gemeinsam aufweisen müssen, nämlich das der Saugfähigkeit für den Haftvermittler und das der späteren Haftung für den Kleber.

Das neuerungsgemäße Kantenband kann in dem Aufbau Vlies-Haftvermittler-PVC-Körper nunmehr überraschend mit PVAc-Leim auf der Basis Polyvinylacetat im Kaltleimaktivierverfahren auf die Schnittkante einer Möbelplatte fest aufgebracht werden. Diese überraschende Möglichkeit wird dadurch gegeben, daß das mit der Klebefläche des PVC-Kantenbandes fest verbundene Vlies mit seiner rauhen, saugfähigen Oberfläche als Art haftvermittelnde Zwischenschicht zwischen dem PVAc-Leim und dem und dem PVC-Körper des Kantenbandes wirkt. Die Haftwirkung des PVAc-Leims über das Vlies auf das PVC-Kantenband ist so gut, daß die Haftwirkung des teuren Zweikomponenten-PVAC-Leims mit Härterzusatz übertroffen wird. Dies gilt auch z.B. in bezug auf eine Schmelzkleberverbindung zwischen einem PVC-Kantenband und der Möbelkante. PVAc-Verleimung ist wärmestabiler, wasserbeständigera als mit Heizschmelzkleber. Auch eine dünnere Klebefuge ist von Vorteil.

- 4 -

Gegenüber der Dicke des PVC-Kantenbandes kann die Dicke des verwendeten Vlieses sehr gering gehalten bleiben. Das Kantenband selbst kann an seiner nach außen gerichteten Oberkante glatt oder als Dekorkante ausgebildet sein.

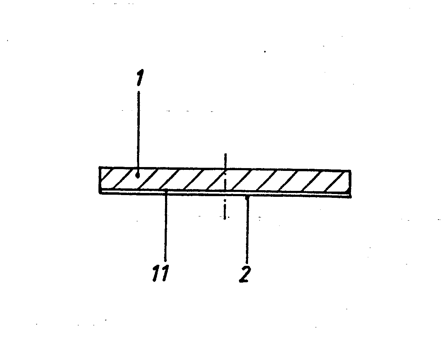

In der Zeichnung ist ein neuerungsgemäßes Kantenband schematisch dargestellt. Das Kantenband 1 weist dabei auf seiner Klebefläche 11 das Vlies 2 auf, welches im Verhältnis zur Dicke des Kantenbandes 1 sehr dünn gehalten ist und nahezu nicht aufträgt. Dies wird als vorteilhaft angesehen, weil auf diese Weise nach der Verleimung des Kantenbandes mit der Schnittfläche der Möbelplatte die Zwischenschaltung des Vliesstreifens aufgrund seiner geringen Dickenabmessungen nicht mehr sichtbar ist.

- Schutzansprüche -

# SCHUTZANSPRÜCHE

1. Kantenband aus Kunststoff zur Verwendung als Kantenumleimer von Platten für Möbel und dergleichen, dadurch gekennzeichnet, daß das Kantenband (1) einseitig auf seiner Klebefläche (11) mit einer saugfähigen Folie (2) fest verbunden ist.

2. Kantenband nach Anspruch 1, dadurch gekennzeichnet, daß die saugfähige Folie ein Vlies ist.

3. Kantenband nach Anspruch 2, dadurch gekennzeichnet, daß das Vlies auf der Basis Cellulose-Textil aufgebaut ist.

4. Kantenband nach Ansprüchen 1-3, dadurch gekennzeichnet, daß die saugfähige Folie bereits vor der Verbindung mit dem Kantenband mit einem Haftvermittler getränkt ist.

0236725

1

11          2